# EUROPÄISCHE PATENTANMELDUNG

(11) **EP 2 315 008 A2**
(43) Veröffentlichungstag der Anmeldung: **27.04.2011**
(21) Anmeldenummer: 10188693.5
(22) Anmeldetag: 25.10.2010
(51) Int. Cl.: G01N 23/04

(54) **Verfahren und Vorrichtung zur 3-dimensionalen Prüfung mittels Röntgenstrahlung**

(30) Priorität: 26.10.2009 DE 102009051045
(71) Anmelder: Göpel electronic GmbH, 07745 Jena (DE)
(72) Erfinder: Hacke, André, 07973 Greiz (DE); Rimbach, Jan, 99096 Erfurt (DE)
(74) Vertreter: Oehmke, Volker

(57) **Zusammenfassung**

Die Erfindung betrifft ein Verfahren zur 3-dimensionalen Prüfung mittels Röntgenstrahlung, bei dem ein Prüfobjekt zwischen einer Röntgenquelle und mindestens einem, für die verwendeten Röntgenstrahlen sensitiven, Sensor positioniert wird, das Prüfobjekt mit von der Röntgenquelle entlang einer in Richtung der Sensoren verlaufenden Achse emittierten und divergierenden Röntgenstrahlen in einem Prüfbereich beaufschlagt wird, wobei Prüfobjekt sowie Röntgenquelle und Sensor relativ zueinander bewegt werden, die durch das Prüfobjekt hindurchtretenden Röntgenstrahlen erfasst werden und sowohl 2-dimensionale Schichten als auch der 3-dimensionale Aufbau des Prüfbereiches ortsaufgelöst dargestellt und analysiert werden, dadurch gekennzeichnet, dass die auf der Oberfläche des Prüfbereiches auftreffenden Röntgenstrahlen einen ersten Strahlfleck erzeugen, die das Prüfobjekt dann durchdringenden Röntgenstrahlen einen zweiten Strahlfleck auf dem Sensor abbilden, die von dem Sensor erfassten Röntgenstrahlen ortsaufgelöst in Form analoger Signale verstärkt, in sichtbares Licht gewandelt und in einem Zwischenbild abgebildet, dieses in Teilabbildungen aufgeteilt und schließlich die Teilabbildungen in digitale Signale überführt werden und während Prüfobjekt sowie Röntgenquelle und Sensor relativ zu einander bewegt werden, die Röntgenstrahlen erfasst werden. Die Erfindung betrifft weiterhin eine Vorrichtung zur Durchführung des Verfahrens.

## Beschreibung

Die Erfindung betrifft ein Verfahren und eine zur Durchführung des Verfahrens geeignete Vorrichtung zur Erzeugung 3-dimensionaler Abbildungen von Prüfobjekten, insbesondere solchen, deren eine Dimension im Verhältnis zu den beiden anderen Dimensionen klein ist, wie dies gattungsgemäß in der DE 103 51 741 A1 beschrieben ist.

Zur Gewährleistung hoher Qualitätsstandards werden eine Reihe von vornehmlich technischen Erzeugnissen einer Prüfung mittels Röntgenstrahlung unterzogen. Dabei wird das Prüfobjekt über seine gesamte Ausdehnung oder über Teilbereiche von der einen Seite her durch Röntgenstrahlen beaufschlagt und die durch das Prüfobjekt hindurchgetretenen Strahlen detektiert. Je nach Abschwächung der Röntgenstrahlen in bestimmten Bereichen eines Prüfbereiches kann auf die dortigen Eigenschaften des Prüfobjektes geschlossen werden.

Ein bekanntes Problem dabei ist, dass bei einer 2-dimensionalen Prüfung in verschiedenen Ebenen liegende Merkmale in nur einem Punkt abgebildet werden. Um eine Auflösung in der dritten Dimension zu erreichen, muss der Punkt aus unterschiedlichen Winkeln aufgenommen und kombiniert werden. In bekannten Verfahren werden zu diesem Zwecke Lage und Ausrichtung von Röntgenquelle(-en) und Sensor(-en) als Bildaufnahmeeinheit relativ zueinander konstant gehalten und um ein stationäres Prüfobjekt geführt. Dies findet besonders bei großen Prüfobjekten und im medizinischen Bereich Anwendung.

Ein räumliches Umfahren eines Prüfobjektes, zumal in Verbindung mit der Anfertigung mehrerer Abbildungen, benötigt eine gewisse Zeit und ist hinsichtlich der dafür erforderlichen Steuerung und Antriebe aufwendig. Eine schnelle, effektive Prüfung einer großen Zahl von Prüfobjekten ist mit einem solchen Verfahren nicht möglich.

Für die Prüfung von im Wesentlichen flachen Baugruppen wie Leiterplatten oder flachen Materialien sind Lösungen bekannt, bei denen die Relativbewegung zwischen Bildaufnahmeeinheit und Prüfobjekt hauptsächlich in einer Ebene erfolgt und keine zusätzliche Bewegung in einer dritten Richtung notwendig ist.

In der US 2003/0081720 A1 wird eine Lösung offenbart, bei der nur eine Röntgenquelle eingesetzt und die Divergenz von in einem Röntgenstrahlbündel abgestrahlten Röntgenstrahlen gezielt ausgenutzt wird. Ein 3-dimensionales Bild eines Prüfobjektes wird unter Nutzung einer für die 2-dimensonale Prüfung konzipierten Anordnung dadurch geschaffen, dass das Prüfobjekt zweimal bestrahlt wird, wobei das Prüfobjekt zwischen den Prüfschritten um einen bestimmten Betrag bewegt oder gekippt wird.

Ein Verfahren und eine Vorrichtung zur schnellen Prüfung mittels Röntgenstrahlung wird in der US 7,245,693 B2 beschrieben. Zwischen einer Röntgenquelle, die in ihrem Verlauf entlang einer Achse divergierende Röntgenstrahlung aussendet, befindet sich ein, in einem Träger gehaltenes und zur Röntgenquelle beabstandetes, Prüfobjekt. Auf der von der Röntgenquelle abgewandten Seite des Prüfobjektes und auf der Achse der ausgesendeten Röntgenstrahlen liegend, ist ein erster Sensor angeordnet. Die Normale der Sensorfläche dieses Sensors verläuft parallel zur Achse der ausgesendeten Röntgenstrahlung. Weiterhin ist mindestens ein weiterer Sensor vorhanden, der nicht auf der Achse liegt, so dass zeitgleich Aufnahmen durch beide Sensoren erfolgen können. Vorzugsweise sind die Sensoren in einer gemeinsamen Ebene und mit zueinander parallelen Flächennormalen angeordnet.

Durch jeden einzelnen Röntgenstrahl wird das Prüfobjekt an einer mit x-y-Koordinaten eindeutig beschreibbaren Stelle der Oberfläche des Prüfobjektes beaufschlagt. Der Röntgenstrahl durchdringt das Prüfobjekt, ausgehend von der Auftreffstelle und annähernd unter dem Winkel, unter dem der Strahl auf das Prüfobjekt trifft. Dabei wird die Strahlung durch die in Richtung des Röntgenstrahles liegenden Materialien des Prüfobjektes teilweise absorbiert. Die resultierende Absorption jedes einzelnen Strahles kann nach Durchtritt durch das Prüfobjekt erfasst werden. Der Verlauf eines jeden Röntgenstrahles ist aufgrund der Kenntnis der Positionierung des das Prüfobjekt haltenden Trägers und der Lage des Auftreffpunktes auf dem Sensor bestimmt. Mit diesen Informationen zu Prüfobjekt und Verlauf des Röntgenstrahles können ortsaufgelöste, 2-dimensionale Bilder erzeugt werden. Aus einer Anzahl solcher Bilder lässt sich bei Bedarf auch der 3-dimensionale Aufbau des Prüfobjektes unter Anwendung bekannter mathematischer Verfahren rekonstruieren.

Eine Bestrahlung eines Artikels (nachfolgend: Prüfobjekt genannt) durch eine einzige Röntgenquelle mit Röntgenstrahlen und die Erfassung der unter verschiedenen Winkellagen durch das Prüfobjekt hindurchgetretenen Röntgenstrahlen wird weiterhin durch die DE 103 51 741 A1offenbart. Ein Prüfobjekt wird unter einem Winkel aus einer zu dem Prüfobjekt beabstandeten Röntgenquelle bestrahlt. Unterhalb des Prüfobjektes ist ein planares Array von parallel zueinander ausgerichteten linearen Sensoren angeordnet, wobei sich jeder Sensor in einer anderen relativen Lage zur Röntgenquelle befindet und durch Röntgenstrahlen getroffen wird, die unterschiedliche, ihre Lage eineindeutig kennzeichnende Winkeln besitzen. Die Anordnung der Sensoren in dem planaren Array kann dabei in definierten geometrischen Figuren oder aber in zufälligen Anordnungen erfolgen. Jeder Sensor kann in zwei "logischen Sensoren" unterteilt sein und jeweils bis zu mehreren tausend Bilderzeugungspixel aufweisen. Durch eine Relativbewegung zwischen Röntgenquelle und Prüfobjekt wird ein Prüfbereich des Prüfobjektes abgerastert. Dazu wird nach jeder Aufnahme mittels eines Relativbewegungsmechanismus das Prüfobjekt relativ zu Röntgenquelle und den zu dieser stationär angeordneten Array von linearen Sensoren um einen Betrag senkrecht zur Längsausdehnung der linearen Sensoren verrückt. Die Verrückung erfolgt zunächst in Richtung der x-Achse in einer mit der Ausdehnung des Arrays zusammenfallenden x-y-Ebene und entspricht der Breite eines Sensors. Es wird bei einem ersten Durchlauf ein erster Streifen des Prüfbereiches in Richtung der x-Achse über die Breite eines Sensors erfasst. Jeder Punkt in dem ersten Streifen des Prüfbereiches wird daher von mindestens einem Sensor unter einer ersten Winkellage erfasst. Nach Beendigung des ersten Durchlaufes wird das Prüfobjekt um die Länge der Sensoren in Richtung der y-Achse verrückt und es erfolgt ein zweiter Durchlauf in der zum ersten Durchlauf entgegengesetzten Richtung der x-Achse. Dies wird wiederholt, bis durch jeden Sensor ein vollständiges Bild des Prüfbereiches aufgenommen wurde.

Die Wandlung und ortsaufgelöste Leitung der auf einen Sensor auftreffenden Röntgenstrahlen in digitale Signale erfolgt durch die Anordnung eines Szintillators, einer Faseroptikplatte und eines für die Röntgenstrahlung sensitiven Sensors wie eines CCD (Charge-Coupled Device)-Sensors, wobei Letzterer als A/D-Wandler fungiert. Nach Beendigung des Abrasterns ist jeder Bildpunkt unter so vielen verschiedenen Winkellagen erfasst worden, wie Sensoren in dem planaren Array vorhanden sind.

Die einzelnen Übertragungsbilder der Sensoren werden durch einen Interpretierer gespeichert und zu einem Schichtbild für jede "konzeptionelle" Schicht des Prüfobjektes kombiniert.

Eine Erstellung einer 3-dimensionalen Abbildung des Prüfbereiches ist für die Interpretation (nachfolgend als Analyse bezeichnet) möglich, aber nicht notwendig.

Die in der Schrift DE 103 51 741 A1 offenbarte Lösung weist vorteilhaft die Möglichkeit auf, 2-dimensionale Schichtbilder und 3-dimensionale Rekonstruktionen der Prüfbereiche mit hohen räumlichen Auflösungen realisieren zu können. Nachteilig ist jedoch, dass nur ein Teil der den Prüfbereich beaufschlagenden Röntgenstrahlen für die Prüfung genutzt wird. Außerdem werden eine größere Anzahl, vorzugsweise wenigstens acht, der recht kostenintensiven und für die Erfassung von Röntgenstrahlen geeigneten, Sensoren benötigt.

Nachteile bekannter Verfahren und Vorrichtungen zur Prüfung von Baugruppen unter Verwendung von Röntgenstrahlen liegen weiterhin in einer zeitintensiven, sequentiellen Positionierung und Bildaufnahme, für die außerdem kostenintensive, hochdynamische Antriebssysteme benötigt werden. Erfolgt die Bildaufnahme statisch, werden die Prüfobjekte aufgrund der langen Expositionszeiten zudem mit entsprechend hohen Strahlendosen belastet.

Der Erfindung liegt die Aufgabe zugrunde, unter Vermeidung der Nachteile des Standes der Technik eine Möglichkeit aufzuzeigen, mit der eine schnelle, präzise, sowohl 2- als auch 3-dimensionale Prüfung sich bewegender Prüfobjekte mittels Röntgenstrahlung realisiert werden kann.

Die Aufgabe wird durch ein Verfahren zur 3-dimensionalen Prüfung mittels Röntgenstrahlung, bei dem ein Prüfobjekt zwischen einer Röntgenquelle und mindestens einem, für die verwendeten Röntgenstrahlen sensitiven, Sensor positioniert wird, das Prüfobjekt mit von der Röntgenquelle entlang einer in Richtung der Sensoren verlaufenden Achse emittierten und divergierenden Röntgenstrahlen in einem Prüfbereich beaufschlagt wird, wobei Prüfobjekt sowie Röntgenquelle und Sensor relativ zueinander bewegt werden, die durch das Prüfobjekt hindurchtretenden Röntgenstrahlen erfasst werden und sowohl 2-dimensionale Schichten als auch der 3-dimensionale Aufbau des Prüfbereiches ortsaufgelöst dargestellt und analysiert werden, dadurch gelöst, dass die auf der Oberfläche des Prüfbereiches auftreffenden Röntgenstrahlen einen ersten Strahlfleck erzeugen, die das Prüfobjekt dann durchdringenden Röntgenstrahlen einen zweiten Strahlfleck auf dem Sensor abbilden, die von dem Sensor erfassten Röntgenstrahlen ortsaufgelöst in Form analoger Signale verstärkt, in sichtbares Licht gewandelt und in einem Zwischenbild abgebildet, dieses in Teilabbildungen aufgeteilt und schließlich die Teilabbildungen in digitale Signale überführt werden und während Prüfobjekt sowie Röntgenquelle und Sensor relativ zu einander bewegt werden (Relativbewegung), die Röntgenstrahlen erfasst werden.

Das erfindungsgemäße Verfahren hebt sich vorteilhaft von dem bekannten Stand der Technik dadurch ab, dass alle das Prüfobjekt durchdringenden Röntgenstrahlen vollständig für die Prüfung verwendet werden. Zudem ist es erfindungswesentlich, dass die von den durchdringenden Röntgenstrahlen transportierten Signale aufgeteilt und mit einer hohen Ortsauflösung erfasst werden, während eine Relativbewegung zwischen Prüfobjekt und Röntgenquelle sowie Sensoren stattfindet. Eine wesentliche Verkürzung des Abbildungsvorganges wird dadurch erreicht, dass die nach dem bekannten Stand der Technik zeitintensive Erfassung der Röntgenstrahlen und deren Umwandlung in ortsaufgelöste, digitale Signale in äußerst vorteilhafter Weise erfolgt.

Bei Anwendung des erfindungsgemäßen Verfahrens werden divergierende Röntgenstrahlen, die von einer Röntgenquelle in einer Abstrahlebene emittiert werden, auf die Oberfläche eines Prüfobjektes gerichtet. Die Oberfläche des Prüfobjektes, insbesondere die Oberfläche des Prüfbereiches, wird hier als in der x-y-Ebene eines kartesischen Koordinatensystems liegend definiert, wobei die Richtung der x-Achse mit der Richtung der Relativbewegung zusammenfällt. Die z-Achse des Koordinatensystems fällt mit der Achse zusammen, entlang der sich die Röntgenstrahlen ausbreiten. Die Divergenz der Röntgenstrahlen kann dabei durch die Winkel charakterisiert werden, welche die äußersten Randstrahlen der emittierten Röntgenstrahlung mit der Achse einschließen und die im Folgenden als Öffnungswinkel bezeichnet werden. Sind die Öffnungswinkel in Richtung der x-Achse (Winkel α) und in Richtung der y-Achse (Winkel β) gleich groß, so wird ein kreisrunder erster Strahlfleck auf eine parallel zur Abstrahlebene der Röntgenquelle liegende Oberfläche abgebildet. Weichen die Winkel α und β voneinander ab, weist der erste Strahlfleck eine andere als kreisrunde Form auf.

Grundsätzlich kann der Verlauf jedes einzelnen Röntgenstrahls durch die Angabe seiner Winkel α und β eindeutig beschrieben werden. Zugleich kann mittels dieser Winkel α und β entlang der z-Achse jedem Punkt des Röntgenstrahls ein Koordinatenpaar (xᵢ, yᵢ) zugeordnet werden.

Die verwendeten Röntgenstrahlen müssen für die vorgesehene Anwendung geeignet sein. Als geeignet gelten hier alle Röntgenstrahlen, deren Eigenschaften wie Wellenlänge und Frequenz, derart sind, dass Prüfobjekt und Sensor bestrahlt werden können, ohne das Schädigungen oder gar Zerstörungen dieser auftreten. Zudem müssen die Röntgenstrahlen den technischen Erfordernissen der Sensor entsprechen, um durch diese erfassbar zu sein.

Das Prüfobjekt wird unter Anwendung des erfindungsgemäßen Verfahrens über die Ausdehnung eines definierten Prüfbereiches hinweg geprüft. Der Prüfbereich kann die gesamte, der Röntgenquelle zugewandte, Oberfläche des Prüfobjektes oder aber nur Bereiche dieser umfassen.

Die von der Röntgenquelle emittierten und die Oberfläche des Prüfobjektes erreichenden Röntgenstrahlen werden in einem ersten Strahlfleck abgebildet. Der erste Strahlfleck kann unter Nutzung bekannter Mittel und Anordnungen zur Formung und Lenkung von Röntgenstrahlen verschieden, beispielsweise rund, oval oder linienförmig, gestaltet sein.

Es ist weiterhin möglich, die emittierten Röntgenstrahlen bereichsweise abzuschatten oder unter Verwendung bekannter optischer Mittel so zu formen, dass dadurch der erste Strahlfleck als ein diskontinuierlicher Strahlfleck mit einer Anordnung von beaufschlagten und nicht-beaufschlagten Bereichen auf der Oberfläche des Prüfobjektes abgebildet wird. Diese Bereiche können dabei in geometrisch regelmäßigen oder unregelmäßigen Beziehungen zu einander angeordnet sein.

In einer bevorzugten Ausführung erfolgt die Abbildung der Röntgenstrahlen auf dem Prüfbereich als mindestens zwei, besser jedoch mindestens drei, Linien, die vorzugsweise senkrecht zur Richtung der Relativbewegung sowie bezüglich der Röntgenquelle unter verschiedenen Winkeln α verlaufen und jeweils eine Vielzahl von Winkeln β beinhalten. Es ist vorteilhaft, wenn die Linien parallel zueinander sind.

Die das Prüfobjekt durchdringenden Röntgenstrahlen werden in einem zweiten Strahlfleck auf der Oberfläche des für die verwendeten Röntgenstrahlen sensitiven Sensors abgebildet.

Es ist weiterhin möglich und im Rahmen der Erfindung liegend, wenn der zweite Strahlfleck als ein kontinuierlicher Strahlfleck abgebildet wird, die Röntgenstrahlen jedoch nur über sich innerhalb der Ausdehnung des zweiten Strahlflecks in geometrisch regelmäßigen oder unregelmäßigen Beziehungen zu einander angeordneten Bereichen erfasst werden.

In einer bevorzugten Ausführung werden zeilenförmige Bereiche erfasst, die senkrecht zur Relativbewegung sowie bezüglich der Röntgenquelle unter verschiedenen Winkellagen verlaufen.

Die Abstände von Röntgenquelle / Prüfobjekt einerseits und Prüfobjekt / Sensor andererseits sind so gewählt, dass die Röntgenstrahlen über den ersten Abstand zwischen Röntgenquelle und Prüfobjekt so weit divergieren können, dass der definierte Prüfbereich ganz oder teilweise durch den auf dem Prüfobjekt abgebildeten ersten Strahlfleck abgedeckt wird.

Jeder Strahl der Röntgenstrahlung, trifft genau einen Punkt des in der x-y Ebene liegenden ersten Strahlfleckes und wird in einem Punkt des zweiten Strahlfleckes abgebildet. Da die Anzahl der zur Verfügung stehenden Strahlen konstant ist, verhalten sich die erreichbare räumliche Auflösung und die Ausdehnung des ersten Strahlfleckes umgekehrt proportional.

Eine Verringerung des Abstandes zwischen Röntgenquelle und Prüfobjekt verkleinert die Größe des ersten Strahlfleckes und erhöht die Auflösung der Aufnahme. Wird der Abstand vergrößert, überdeckt der erste Strahlfleck einen größeren Teil des Prüfbereiches, allerdings reduziert sich dadurch die mögliche Auflösung der Aufnahme.

Bevorzugt wird die Ausdehnung des ersten Strahlflecks so gewählt, dass eine für den Prüfzweck ausreichende Auflösung gewährleistet wird und außerdem ein Abrastern des Prüfbereiches mit möglichst wenigen Änderungen der Richtung der Relativbewegung erfolgen kann.

Der zweite Abstand zwischen Prüfobjekt und Sensor richtet sich vornehmlich nach der Größe der sensitiven Fläche des verwendeten Sensors.

In dem Sensor werden durch geeignete technische Mittel die auftreffenden Röntgenstrahlen ortsaufgelöst erfasst, die durch die Röntgenstrahlen transportierten Signale gewandelt, verstärkt und in sichtbares Licht umgewandelt. Es wird also eine, als Zwischenabbildung bezeichnete, Abbildung des zweiten Strahlflecks in Wellenlängen des sichtbaren Lichtes erzeugt und zur Verfügung gestellt. Dabei bleiben die Signale zu jedem Zeitpunkt ortsaufgelöst erhalten. Signale sind hier vorzugsweise durch elektromagnetische Strahlen transportierte Energien wie beispielsweise Photonen und/oder Elektronen. Im Sinne dieser Anmeldung werden Röntgenstrahlen als nicht sichtbare, elektromagnetische Strahlen betrachtet. Effekte wie die Lilienfeldstrahlung bleiben hier außer Betracht.

Nach Erzeugung der Zwischenabbildung wird diese nahezu verlustfrei, wahlweise in aneinander angrenzende oder sich teilweise überlappende Teilabbildungen zerlegt, wobei die Teilabbildungen in ihrer Gesamtheit den zweiten Strahlfleck vollständig darstellen. Jede Teilabbildung wird in eine, für eine datentechnische Verarbeitung geeignete, Signalform überführt. Dies erfolgt beispielsweise durch einen Analog-DigitalWandler (A/D-Wandler).

Ein Aufteilung der Signale in Teilabbildungen kann grundsätzlich mit jedem der Prozesse der Erfassung, Verstärkung, Wandlung und Überführung in einer andere Signalform verbunden sein. So kann beispielsweise in einer Ausführung der Erfindung bereits die Erfassung des zweiten Strahlflecks in Form von Teilabbildungen erfolgen.

Die Umwandlung der Signale in eine Zwischenabbildung der Wellenlängen sichtbaren Lichtes erlaubt in äußerst vorteilhafter Weise die Verwendung von sehr leistungsfähigen A/D-Wandlern, die nicht für die hochenergetische Röntgenstrahlung sensitiv sein müssen. Dadurch wird eine zum nächstliegenden Stand der Technik wesentlich kostengünstigere Ausgestaltung ermöglicht.

Gemäß dem erfindungsgemäßen Verfahren erfolgt die Relativbewegung zwischen den in ihrer relativen Lagebeziehung zueinander festen Röntgenquelle und Sensor relativ und dem Prüfobjekt entlang der x-y-Ebene.

Nach einem vorbestimmten Betrag der Relativbewegung in Richtung der x- und/oder y-Achse erfolgt eine weitere Erfassung von Röntgenstrahlen, wobei der Betrag vorzugsweise kleiner als die Ausdehnung des ersten Strahlflecks in Richtung der Relativbewegung ist, sich die erzeugten Zwischenabbildungen also überlappen. Nur diejenigen Punkte, die in dem Überlappungsbereich liegen, sind unter mindestens zwei Winkellagen erfasst worden und 3-dimensional darstellbar.

Der Prüfbereich wird durch die Röntgenstrahlung nacheinander vollständig und vorzugsweise in einem kontinuierlichen Ablauf der Relativbewegung unter Anwendung eines aus dem Stand der Technik bekannten Verfahren abgerastert.

Sowohl die Relativbewegung als auch die Erfassung der Röntgenstrahlen werden aufeinander abgestimmt und gesteuert.

Die zu einem Zeitpunkt erfassten Röntgenstrahlen und die durch diese transportierten Signale stellen die Absorptionsverhältnisse entlang der Verläufe der einzelnen Röntgenstrahlen bei deren Durchdringen des Prüfobjektes 2-dimensional dar. Der Öffnungswinkel der Röntgenstrahlung bleibt dabei nahezu konstant. Auftretende Beugungseffekte sind bei den üblicherweise verwendeten Strahlungsparametern und Materialien der Prüfobjekte so gering, dass diese hier vernachlässigt werden können. Die nacheinander (sequentiell) erfassten Teilabbildungen eines Prüfbereiches werden gespeichert und für eine Bearbeitung bereitgestellt. Eine nachfolgende Analyse kann beispielsweise durch den Vergleich der erfassten Röntgenstrahlen mit Referenzbildern oder örtlich zugewiesenen Schwellwerten erfolgen.

Die Zuordnung und Verifizierung der Lage der Punkte in der x-y-Ebene erfolgt durch den Abgleich von Lageinformationen zwischen Antrieb und Steuerung. Zusätzlich können auf dem Prüfobjekt eingebrachte und eindeutig identifizierbare Marken zur Erfassung und Kontrolle der Lageinformationen benutzt werden. Solche Marken können auch distinkte Strukturen des Prüfobjektes wie beispielsweise markante Punkte von Baugruppen sein.

Zudem kann sich die Analyse der Abbildungen auf eine Auswahl der gespeicherten Teilabbildungen eines Prüfobjektes beschränken. Vermutete Fehlerstellen können bei Bedarf unter weiteren Winkellagen abgebildet werden, indem z. B. gespeicherte und bis dahin nicht berücksichtigte Teilabbildungen zusätzlich in die Analyse einbezogen werden.

Zur Rekonstruktion 3-dimensionaler Abbildungen werden eine Reihe von 2-dimensionalen, unter verschiedenen Winkellagen erfolgte Teilabbildungen eines Prüfbereiches kombiniert und unter Anwendung bekannter mathematischer Verfahren miteinander verrechnet. Dabei kann die Auflösung der 3-dimensionalen Abbildung erhöht werden, wenn Teilabbildungen verwendet werden, die nach jeweils einer geringen Relativbewegung erfasst worden sind. Da mit steigender Auflösung auch die benötigte Rechenzeit und die erforderlichen Speicherkapazitäten zunehmen, ist für den praktischen Einsatz des Verfahrens ein Kompromiss zwischen Auflösung und Prüfgeschwindigkeit sowie der Anzahl der berücksichtigten 2-dimensionalen Teilabbildungen zu suchen.

Aufnahmefrequenz und Geschwindigkeit der Relativbewegung können in Abhängigkeit der Erfordernisse einer Prüfung eines bestimmten Prüfobjektes frei gewählt werden. Die Aufgabe wird weiterhin durch eine Vorrichtung zur 3-dimensionalen Prüfung mittels Röntgenstrahlung aufweisend eine Röntgenquelle und mindestens einen, zu dieser in einer festen Lagebeziehung angeordneten, Sensor, einen zwischen Röntgenquelle und Sensor vorhandenen Träger zur Aufnahme des Prüfobjektes, einen mit einer Steuerung verbundenem Antrieb zur Realisierung einer Relativbewegung zwischen Prüfobjekt einerseits sowie Röntgenquelle und Sensor andererseits, dadurch gekennzeichnet, dass die sensitive Oberfläche des Sensors mindestens so groß ist, wie ein zweiter Strahlfleck, der durch die durch das Prüfobjekt hindurchgetretenen Röntgenstrahlen auf der Oberfläche des Sensors abgebildet wird, der Sensor derart ausgebildet ist, dass Mittel vorhanden sind, welche die Abbildung des zweiten Strahlflecks als ortsaufgelöste Signale verstärken, in sichtbares Licht wandeln und in einem Zwischenbild abbilden, die Zwischenabbildung in Teilabbildungen aufteilen und schließlich die Teilabbildungen in digitale Signale überführen.

Die von der eingesetzten Röntgenquelle emittierte Röntgenstrahlung wird durch bekannte strahllenkende Mittel, wie z. B. einen Kollimator, entlang der Achse gerichtet ausgestrahlt. Der halbe Öffnungswinkel des Röntgenstrahlbündels beträgt dabei zwischen 20° und 80°, vorzugsweise aber 50° bis 70°. Es können weiterhin abschattende oder strahlformende Mittel an oder bei der Röntgenquelle angeordnet sein.

Das Prüfobjekt wird in einem Träger in der x-y-Ebene positioniert und gehalten. Der Träger ist mit einer Steuerung und einem Antrieb verbunden.

Der Sensor besteht vorzugsweise aus einem oder mehren opto-elektronischen Elementen, die dazu geeignet sind, die in dem zweiten Strahlfleck auftreffende Röntgenstrahlung in für eine nachfolgende Verarbeitung und Auswertung nutzbare analoge Signalform umzuwandeln.

Der Sensor kann dabei aus einer funktionellen Schicht, z. B. in Form einer dünnen Platte bestehen, in der alle oder zumindest zwei der Prozesse der Verstärkung, Wandlung, Abbildung und Aufteilung der Signale erfolgen.

Er kann weiterhin aus verschiedenen Elementen bestehen, die ihrerseits in enger räumlicher und funktioneller Anordnung zueinander stehen können, wie es z. B. ein schichtweiser Aufbau des Sensors bedingen würde. Die Elemente können jedoch auch jeweils einzeln oder in Gruppen von mindestens zwei Elementen, als distinkte Elemente angeordnet sein.

Ein erstes Element kann so aufgebaut sein, dass z. B. eine Photonenstrahlung mit hoher Energie (z. B. >150 keV), wie sie durch die Röntgenstrahlung gegeben ist, in eine Photonenstrahlung mit geringerer Energie (z. B. <100 keV) gewandelt wird.

Ein zweites Element kann so beschaffen sein, dass die von der ersten Schicht abgegebenen Signale aufgenommen, verstärkt und ortsaufgelöst bereitgestellt werden.

Der Aufbau eines dritten Element kann so sein, dass die Signale in Licht mit Wellenlängen umgesetzt werden, die sich auf opto-elektronischen Weg effektiv in digitale Signale übersetzen lassen. Werden hierfür fluoreszierende Flächen verwendet, ist es äußerst vorteilhaft, wenn deren Nachleuchtzeiten so gering wie möglich, vorzugsweise kleiner 100 ns, sind. Dadurch werden Verwischungseffekte verringert und hohe Geschwindigkeiten beim Abrastern überhaupt erst ermöglicht.

In einem vierten Element können solche Vorrichtungen vorhanden sein, dass die von dem dritten Element bereitgestellten Signale nahezu verlustfrei aufgeteilt und die aufgeteilten Signale auf für die Wellenlänge der Signale sensitive Analog-DigitalWandler (AD-Wandler) gerichtet werden können.

Letztere sind vorzugsweise Zeilenkameras mit einer möglichst hohen Anzahl von Sensor-Elementen (>4000 Pixel) und hohen Verarbeitungsgeschwindigkeiten.

Alle Elemente des erfindungsgemäßen Sensors sind so aufeinander abgestimmt, dass eine Signalleitung in so kurzer Zeit erfolgt, dass die Erfassung der Röntgenstrahlen während der Relativbewegung erfolgen können.

Es können weiterhin optische, opto-elektronische oder mechanische Mittel angeordnet sein, die auftretende Verzeichnungen oder sonstige Abbildungsfehler bei der Übertragung der Signale verringern.

Die A/D-Wandler sind mit einer datentechnischen Anlage verbunden, in der die Aufnahmen gespeichert und verarbeitet werden können. Die datentechnische Anlage ist zudem mit einer Steuerung verbunden, welche die Verschiebung des, das Prüfobjekt haltenden, Trägers relativ zur Röntgenquelle über einen Antrieb steuert und von welcher Informationen über die augenblickliche relative Lage des Trägers, und damit des Prüfobjektes, zur Röntgenquelle an die datentechnische Anlage übermittelt werden. Weiterhin wird durch die Steuerung die Röntgenquelle kontrolliert.

Bei Anwendung des erfindungsgemäßen Verfahrens und der Vorrichtung wird ein Prüfobjekt durch sich entlang einer Achse ausbreitende und dabei bezüglich der Achse divergierende Röntgenstrahlen in einem Prüfbereich bestrahlt. Das Prüfobjekt, dessen Ausdehnung in einer dritten Dimension vorzugsweise wesentlich kleiner ist als in den anderen beiden Dimensionen, wird in einem Träger zwischen der einen Röntgenquelle und eines Sensors positioniert und gehalten. Dieser Träger ist entlang einer x-y-Ebene, die sich orthogonal der Achse und entlang der Oberfläche des Prüfbereiches erstreckt, beweglich. Der Abstand zwischen Röntgenquelle und Prüfobjekt ist so bemessen, dass ein erster Strahlfleck auf dem Prüfobjekt abgebildet wird und mindestens einen Teil des Prüfbereiches überdeckt. Jedem auf der Oberfläche des Prüfobjektes auftreffenden Röntgenstrahl kann eineindeutig eine Koordinate in der x-y-Ebene zugeordnet werden. Die Röntgenstrahlen durchdringen das Prüfobjekt und werden in einem zweiten Strahlfleck auf einem Sensor abgebildet. Der zweite Strahlfleck beinhaltet als 2-dimensionale, analoge Abbildungen Informationen über die Absorptionsverhältnisse entlang der Verläufe der einzelnen Röntgenstrahlen im Inneren des Prüfobjektes. In einer ersten Schicht des Sensors erfolgt ortsaufgelöst eine Umwandlung der auftreffenden Energieform und der durch diese transportierten Signale. Diese werden in der zweiten Schicht verstärkt, in einer dritten Schicht in sichtbares Licht umgewandelt und anschließend in Form von Teilabbildungen auf verschiedene Teilstrahlengänge aufgeteilt. Schließlich wird jede Teilabbildungen mittels eines A/D-Wandlers erfasst, wobei die analogen Informationen in eine 2-dimensionale, digitale Abbildung überführt werden.

Diese Informationen werden in einer datentechnischen Anlage gespeichert und verarbeitet. Aus einer Mehrzahl von 2-dimensionalen Abbildungen, die jeweils nach einer Relativbewegung zwischen Röntgenquelle und Prüfobjekt gewonnen werden und in denen Punkte des Prüfobjektes unter mindestens zwei unterschiedlichen Winkellagen erfasst wurden, können 3-dimensionale Abbildungen des Prüfobjektes erstellt werden. Mit dem erfindungsgemäßen Verfahren und der Vorrichtung lassen sich beispielsweise geometrische Vergrößerungen von 10 und elektronische Verstärkungen von 10⁵ bei einer räumlichen Auflösung von 10 µm erreichen.

Die Erfindung wird nachstehend anhand von Ausführungsbeispielen und Zeichnungen erläutert. Dabei zeigt
- Fig. 1: eine perspektivische, schematische Darstellung einer ersten Ausführung der erfindungsgemäßen Vorrichtung,
- Fig. 2: eine perspektivische, schematische Darstellung einer zweiten Ausführung der erfindungsgemäßen Vorrichtung.

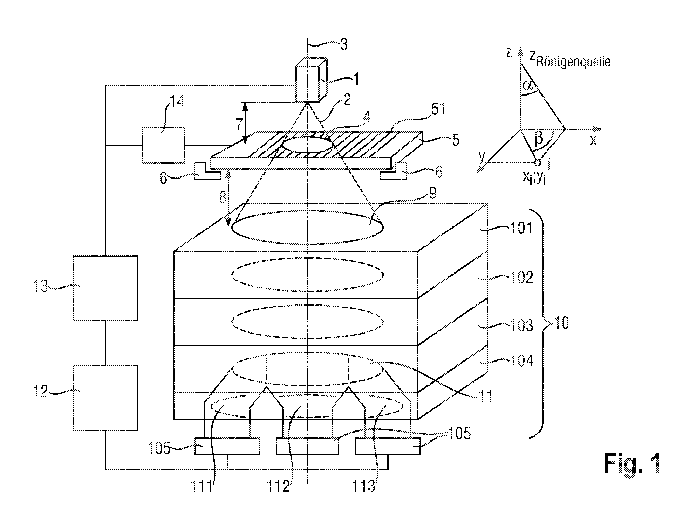

In einer ersten Ausführung gemäß Fig. 1 sind im Wesentlichen eine Röntgenquelle 1, der Verlauf von Röntgenstrahlen 2 bis zu einem Sensor 10 sowie in vereinfachter Form die Signalwandlung und Signalverarbeitung in dem Sensor dargestellt.

Die Röntgenquelle 1 (Röhrenspannung max. 130 kV, Röhrenstrom max. 0,3 mA) emittiert Röntgenstrahlen 2 entlang einer Achse 3, wobei die Röntgenstrahlen 2 von der Achse 3 unter einem halben Öffnungswinkel von 55° divergieren. Die Röntgenstrahlen 2 sind auf einen Prüfbereich 51 eines Prüfobjektes 5 gerichtet, welches eine flächige Ausdehnung entlang einer senkrecht zur Achse 3 verlaufenden x-y-Ebene (durch das Koordinatensystem gezeigt) aufweist. Die Ausdehnung des Prüfobjektes 5 in Richtung der Achse 3 ist geringer als die in der x-y-Ebene. Ein solches Prüfobjekt 5 ist hier eine schematisch dargestellte elektronische Flachbaugruppe, die auf beiden Seiten mit elektronischen Bauteilen bestückt ist. Das Prüfobjekt 5 wird in einem Träger 6 positioniert und gehalten, wobei der Träger 6 mittels eines Antriebes 14 und einer mit diesem verbundenen Steuerung 13 sowohl in der x-y-Ebene als auch in Richtung der Achse 3 bewegt werden kann. Durch die achsparallelen Bewegungsmöglichkeiten können ein erster Abstand 7 zwischen Röntgenquelle 1 und Prüfobjekt 5 und ein zweiter Abstand 8 zwischen Prüfobjekt und einem aus Schichten 101 bis 104 bestehenden Sensor 10 eingestellt werden. Die Steuerung 13 und der Antrieb 14 sind mit einer datentechnischen Anlage 12 verbunden. Die Steuerung 13 ist weiterhin mit der Röntgenquelle 1 verbunden.

Der Träger 6 ist so gestaltet, dass das Prüfobjekt 5 nur außerhalb des Prüfbereiches 51 gehalten wird. Auf der Oberfläche des Prüfobjektes 5 wird die Röntgenstrahlung 2 als ein kreisförmiger erster Strahlfleck 4 auf dem Prüfbereich 51 abgebildet und deckt diesen zu etwa 25% ab. Jeder Röntgenstrahl 2 besitzt einen bekannten, kennzeichnenden Winkel α in Richtung der x-Achse und einen ebenfalls bekannten Winkel β in Richtung der y-Achse (im Koordinatensystem dargestellt; Z_{Röntgenquelle} entspricht erstem Abstand 7). Dadurch kann jedem Punkt i, in dem ein Röntgenstrahl 2 in dem ersten Strahlfleck 4 abgebildet wird, eine Koordinate (xᵢ, yᵢ) in der x-y-Ebene eineindeutig zugeordnet werden.

Die Röntgenstrahlen 2 durchdringen das Prüfobjekt 5 und werden nach Durchlaufen des zweiten Abstandes 8 in einem zweiten Strahlfleck 9 auf der Oberfläche des Sensors 10 abgebildet. Die von dem zweiten Strahlfleck 9 bestrahlte erste Schicht 101 des Sensors 10 ist eine Szintillatorschicht bestehend aus dotierten Natriumiodid-Kristallen. In dieser verursachen die Photonen der auftreffenden Röntgenstrahlung die Entstehung freier Elektronen und Elektronenlöcher. Die Elektronenlöcher werden durch Elektronen von äußeren Orbitalen wieder besetzt, wobei es zur Abgabe von Lichtenergie in Form von Photonen kommt. Die freigesetzten Photonen besitzen eine Energie von weniger als 100 keV. Im Ausführungsbeispiel werden objektseitige Auflösungen von <0,010 mm / Pixel bei einer Abbildungsgeschwindigkeit von >30.000 Zeilen/s erreicht.

In weiteren Ausführungen können alle geeigneten anorganischen und organischen Szintillatoren eingesetzt werden.

Das durch die von der Schicht 101 freigesetzten Photonen transportierte Signal wird in einer zweiten Schicht 102 verstärkt. Diese besteht aus einer für das Auftreten eines äußeren fotoelektrischen Effektes geeigneten Mikrokanalplatte und den benötigten Elementen zur Erzeugung eines elektrischen Feldes zur Beschleunigung der durch die Photonen in der zweiten Schicht 102 freigesetzten Elektronen (alle nicht dargestellt). Die Signalverstärkung erfolgt dabei in bekannter Weise.

Anstatt einer Mikrokanalplatte können in weiteren Ausführungen auch Photokathoden verwendet werden, wobei die Ortsauflösung der verstärkten Signale gewährleistet bleiben muss. Die kann beispielsweise durch die Anordnung von Faseroptikplatten erfolgen.

Es kann in weiteren Ausgestaltungen der Erfindung auch auf die zweite Schicht 102 verzichtet werden. Ferner kann die Verstärkung einen Wert von 1 oder aber weniger als 1 betragen.

Eine dritte Schicht 103 wandelt die in der zweiten Schicht 102 beschleunigten Elektronen in sichtbares Licht, dessen Wellenlängenverteilung eine höchste Amplitude von 540 nm aufweist, indem die beschleunigten Elektronen auf einen fluoreszierenden Schirm (nicht dargestellt) gelenkt werden, dessen Nachleuchtzeit weniger als 100 ns beträgt. Auf dem fluoreszierendem Schirm entsteht eine ortsaufgelöste Zwischenabbildung 11 des zweiten Strahlfleckes 9 aus Wellenlängen sichtbaren Lichtes.

Die Zwischenabbildung 11 wird in der vierten Schicht 104 mittels einer Anordnung von Spiegeln (nicht dargestellt) in drei Teilabbildungen 111 bis 113 zerlegt, wobei alle Teilabbildungen 111 bis 113 zusammen wieder die Zwischenabbildung 11 ergeben.

In weiteren Ausführungen können sich die Teilabbildungen 111 bis 113 auch teilweise überlappen.

Die Zerlegung der Zwischenabbildung 11 in Teilabbildungen 111 bis 113 kann in weiteren Ausführungen auch mittels Lichtwellenleiter oder einem Standardobjektiv mit Strahlteiler erfolgen.

Die Zerlegung der Zwischenabbildung 11 in Teilabbildungen 111 bis 113 kann zudem in jeder der ersten bis vierten Schicht 101 bis 104 erfolgen.

Jede der Teilabbildungen 111 bis 113 wird auf je einen A/D-Wandler 105 projiziert, welche die analogen Bildsignale der Teilabbildungen 111 bis 113 in digitale Signalformen wandeln. Dafür werden im Ausführungsbeispiel TDI-Zeilenkameras mit 4096 x 96 Bildpunkten, einer Zeilenfrequenz von 36 kHz und einer Taktfrequenz von 150 MHz eingesetzt. Die A/D-Wandler 105 sind im Ausführungsbeispiel in den Sensor 10 integriert.

Es können natürlich auch jegliche andere opto-elektronische Mittel verwendet werden, deren Leistungsmerkmale eine Signalwandlung im Sinne der Erfindung erlauben.

In weiteren Ausführungen der Erfindung kann eine andere Anzahl von A/D-Wandlern 105 vorhanden sein. So kann insbesondere eine Flächenkamera verwendet werden, deren Sensorfläche die Abbildung des gesamten zweiten Strahlfleckes 9 ortsaufgelöst erfassen kann. Durch die Flächenkamera können auch mehrere Teilabbildungen 111 bis 113 erfasst werden.

Ferner ist es möglich, mehrere Sensoren 10 anzuordnen, die zudem auch in einer Einheit zusammengeschlossen sein können.

Die Anbindung der als A/D-Wandler 105 eingesetzten TDI-Zeilenkameras kann weiterhin durch ein Optikmodul mit einer numerischen Apertur von > 0,2 gebildet werden, welches zwischen der vierten Schicht 104 und den A/D-Wandlern 105 angeordnet wird. Durch ein solches Optikmodul können die bei der Projektion der Teilabbildungen 111 bis 113 auf die A/D-Wandler 105 entstehenden Verzeichnungen weitgehend kompensiert werden.

In einer weiteren Ausführungen erfolgt die Ankopplung des A/D-Wandlers 105 über ein Standardobjektiv mit Strahlteiler.

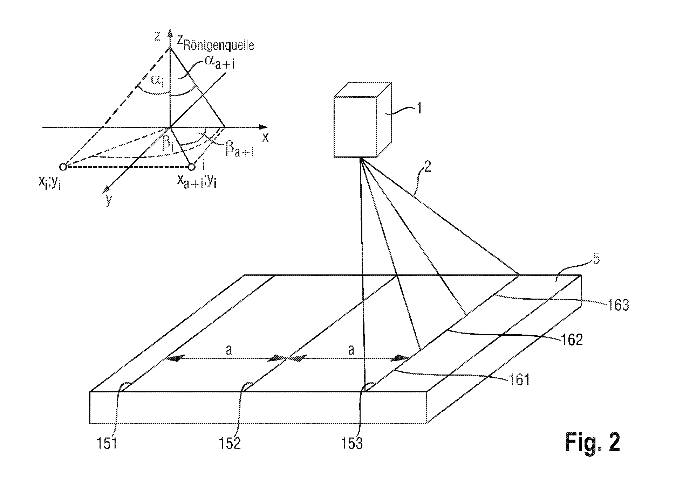

In einem zweiten Ausführungsbeispiel wird gemäß Fig. 2 die Röntgenstrahlung 2 bereits an der Röntgenquelle 1 durch bekannte optische Mittel (nicht dargestellt) so abgeschattet, dass diese auf der Oberfläche des Prüfobjektes 5 als diskontinuierlicher erster Strahlfleck 4 in Form von drei Linien 151 bis 153 abgebildet wird. Die Linien 151 bis 153 verlaufen in Richtung der y-Achse und sind entlang der x-Achse gleichmäßig mit einem Betrag a zu einander beabstandet. Entlang jeder der Linien 151 bis 153 sind drei, sich teilweise überlappende, Linienbereiche 161 bis 163 (beispielhaft für Linie 153 dargestellt) gekennzeichnet. Der Aufbau des zweiten Ausführungsbeispieles entspricht ansonsten dem in Fig. 1 gezeigten Ausführungsbeispiel, weswegen auf eine vollständige Darstellung im Sinne der Übersichtlichkeit verzichtet wird.

Jeder Linienbereich 161 bis 163 wird durch je einen A/D-Wandler 105 erfasst, wobei je Aufnahmezeitpunkt der dem A/D-Wandler 105 zugeordnete Linienbereich 161 oder 162 oder 163 aller Linien 151 bis 153 erfasst wird.

Beispielhaft besitzt ein auf der Linie 151 befindlicher Punkt i eine in Bezug auf die Röntgenquelle 1 sowohl durch das Koordinatenpaar (xᵢ, yᵢ) als auch durch die Winkel αᵢ und βᵢ beschreibbare Lage (im Koordinatensystem gezeigt). Für eine weitere Aufnahme erfolgt eine Relativbewegung in Richtung zunehmender Koordinaten der x-Achse um den Betrag a. Der Punkt i befindet sich nun auf der Linie 152, besitzt das Koordinatenpaar (xᵢ₊ₐ; yᵢ) und wird durch Röntgenstrahlen 2 unter den hier als αᵢ₊ₐ und βᵢ₊ₐ bezeichneten Winkeln beaufschlagt, wobei αᵢ ungleich αᵢ₊ₐ gilt. Für den Durchlauf des Punktes i durch die Linie 153 trifft oben Erläutertes entsprechend zu.

In weiteren Ausführungen können die Linienbereiche 161 bis 163 auch überlappungsfrei aneinander angrenzen. Zudem können die Linien 151 bis 153 unterschiedlich voneinander beabstandet sein.

Ferner ist es möglich, Verzeichnungen, die bei der Signalleitung durch die Schichten 101 bis 104 des Sensors 10 auftreten, durch geeignete Maßnahmen zu kompensieren. Solche Maßnahmen können logischer Natur wie die Verwendung von mathematischen Algorithmen sein und/oder optische, opto-elektronische und mechanische Mittel umfassen.

Die durch die A/D-Wandler 105 erfassten und gewandelten Signale werden einer datentechnischen Anlage 12 wie einem PC zugeleitet. Dort können die eingehenden Informationen gespeichert, bearbeitet und analysiert werden.

Um eine Anzahl von Aufnahmen aus unterschiedlichen Winkeln zu erhalten, wird der Prüfbereich 51 durch den ersten Strahlfleck 4 abgetastet, wobei der Träger 6 mit dem Prüfobjekt 5 einerseits und die Röntgenquelle 1 sowie Sensor 10 andererseits eine Relativbewegung zueinander ausführen. Durch die Steuerung 13 wird der Antrieb 14 des Trägers 6, die Röntgenquelle 1 und der Sensor 10 angesteuert.

Es ist ferner möglich, dass datentechnische Anlage 12 und Steuerung 13 eine Einheit sind.

Die Steuerung 13 kann ebenfalls verwendet werden, um die einzelnen Schichten 101 bis 104 und den A/D-Wandler 105 anzusteuern, beispielsweise um die Qualität der Zwischenabbildung 11 bzw. der Teilabbildungen 111 bis 113 anzupassen oder um ein Rauschen zu minimieren.

Anhand der 2-dimensionalen Abbildungen des Prüfobjektes 5 und der bei Bedarf aus diesen erstellbaren 3-dimensionalen Abbildungen kann das Prüfobjekt 5 durch den Vergleich mit Referenzbildern hinsichtlich des Vorhandenseins von fehlerhaften Bauteilen oder Materialien oder abweichende Bauteilgeometrien analysiert werden.

Die Vorteile der erfindungsgemäßen Vorrichtung und des mit dieser durchführbaren erfindungsgemäßen Verfahrens liegen darin, dass Abbildungen von Prüfobjekten 5 unter verschiedenen Winkellagen angefertigt werden können, während eine kontinuierliche Relativbewegung zwischen der aus Röntgenquelle 1 und Sensor 10 bestehenden Bildaufnahmeeinheit und dem Prüfobjekt 5 erfolgt. Es werden zeitgleich mindestens zwei (Teil-)Abbildungen erfasst und für eine weitere Bearbeitung und Analyse bereitgestellt. Zudem werden alle, das Prüfobjekt 5 durchdringende Röntgenstrahlen 2 ausgenutzt, was eine deutliche Erhöhung der Effektivität des Verfahrens im Verhältnis zum bekannten Stand der Technik bedeutet. Weiterhin wird die Geschwindigkeit des Abbildungsvorganges dadurch wesentlich gesteigert, dass die ortsaufgelöst zu erfassenden Signale in Wellenlängen umgewandelt werden, die mit sehr schnellen und leistungsfähigen Kameras erfasst werden können.

Die Erfindung kann beispielweise zur Prüfung von elektronischen Flachbaugruppen sowie von homogenen und inhomogenen Materialien, insbesondere hinsichtlich des Vorhandenseins von makro- und mikroskopischen Veränderungen wie z. B. von Dichteschwankungen, Lufteinschlüssen oder der Einlagerung von Fremdmaterialien, verwendet werden. Weiterhin können solche Fehler räumlich eindeutig zugeordnet werden. Neben der Prüfung auf Fehler in den vorhandenen Materialien kann natürlich auch geprüft werden, ob sich Materialien an den vorgesehenen Stellen (z. B. Lötzinn an einer Lötstelle) befinden und ob ihre räumlichen Abmessungen den Erwartungen entsprechen. Besonders vorteilhaft lässt sich die Erfindung bei der Prüfung von Prüfobjekten 5 anwenden, die in 2 der 3 räumlichen Dimensionen sehr groß sind.

### Bezugszeichenliste

- 1: Röntgenquelle
- 2: Röntgenstrahlen
- 3: Achse
- 4: erster Strahlfleck
- 5: Prüfobjekt
- 51: Prüfbereich
- 6: Träger
- 7: erster Abstand
- 8: zweiter Abstand
- 9: zweiter Strahlfleck
- 10: Sensor
- 101: erste Schicht
- 102: zweite Schicht
- 103: dritte Schicht
- 104: vierte Schicht
- 105: AD-Wandler
- 11: Zwischenabbildung
- 111: erste Teilabbildung
- 112: zweite Teilabbildung
- 113: dritte Teilabbildung
- 12: datentechnischen Anlage
- 13: Steuerung
- 14: Antrieb
- 151: erste Linie
- 152: zweite Linie
- 153: dritte Linie
- 161: erster Linienbereich
- 162: zweiter Linienbereich
- 163: dritter Linienbereich
- i: Punkt i
- a: Betrag

## Patentansprüche

1. Verfahren zur 3-dimensionalen Prüfung mittels Röntgenstrahlung, bei dem ein Prüfobjekt zwischen einer Röntgenquelle und mindestens einem, für die verwendeten Röntgenstrahlen sensitiven, Sensor positioniert wird, das Prüfobjekt mit von der Röntgenquelle entlang einer in Richtung der Sensoren verlaufenden Achse emittierten und divergierenden Röntgenstrahlen in einem Prüfbereich beaufschlagt wird, wobei Prüfobjekt sowie Röntgenquelle und Sensor relativ zueinander bewegt werden, die durch das Prüfobjekt hindurchtretenden Röntgenstrahlen erfasst werden und sowohl 2-dimensionale Schichten als auch der 3-dimensionale Aufbau des Prüfbereiches ortsaufgelöst dargestellt und analysiert werden, **dadurch gekennzeichnet, dass**
- die auf der Oberfläche des Prüfbereiches (51) auftreffenden Röntgenstrahlen (2) einen ersten Strahlfleck (4) erzeugen,
- die das Prüfobjekt (5) dann durchdringenden Röntgenstrahlen (2) einen zweiten Strahlfleck (9) auf dem Sensor (10) abbilden,
- die von dem Sensor (10) erfassten Röntgenstrahlen (2) ortsaufgelöst in Form analoger Signale verstärkt, in sichtbares Licht gewandelt und in einem Zwischenbild (11) abgebildet, dieses in Teilabbildungen (111 bis 113) aufgeteilt und schließlich die Teilabbildungen (111 bis 113) in digitale Signale überführt werden und
- während Prüfobjekt (5) sowie Röntgenquelle (1) und Sensor (10) relativ zu einander bewegt werden, die Röntgenstrahlen (2) erfasst werden.

2. Verfahren nach Anspruch 1, **dadurch gekennzeichnet, dass** der erste Strahlfleck (4) als ein diskontinuierlicher Strahlfleck in Form von beaufschlagten und nicht-beaufschlagten Bereichen auf der Oberfläche des Prüfobjektes (5) abgebildet wird.

3. Verfahren nach Anspruch 1 und 2, **dadurch gekennzeichnet, dass** die beaufschlagten Bereiche in regelmäßigen geometrischen Beziehungen zueinander angeordnet werden.

4. Verfahren nach Anspruch 3, **dadurch gekennzeichnet, dass** die beaufschlagten Bereiche als zueinander parallele Linien erzeugt werden.

5. Vorrichtung zur 3-dimensionalen Prüfung mittels Röntgenstrahlung aufweisend eine Röntgenquelle und mindestens einen, zu dieser in einer festen Lagebeziehung angeordneten, Sensor, einen zwischen Röntgenquelle und Sensor vorhandenen Träger zur Aufnahme des Prüfobjektes, einen mit einer Steuerung verbundenem Antrieb zur Realisierung einer Relativbewegung zwischen Prüfobjekt einerseits sowie Röntgenquelle und Sensor andererseits, **dadurch gekennzeichnet, dass**
- die sensitive Oberfläche des Sensors (10) mindestens so groß ist, wie ein zweiter Strahlfleck (9), der durch die durch das Prüfobjekt (5) hindurchgetretenen Röntgenstrahlen (2) auf der Oberfläche des Sensors (10) abgebildet wird,
- der Sensor (10) derart ausgebildet ist, dass Mittel vorhanden sind, welche die Abbildung des zweiten Strahlflecks (9) als ortsaufgelöste Signale verstärken, in sichtbares Licht wandeln und in einem Zwischenbild (11) abbilden, die Zwischenabbildung (11) in Teilabbildungen (111 bis 113) aufteilen und schließlich die Teilabbildungen (111 bis 113) in digitale Signale überführen.

6. Vorrichtung nach Anspruch 5, **dadurch gekennzeichnet, dass** der Sensor (10) aus einer Abfolge von Schichten (101 bis 104) besteht, wobei in der ersten Schicht (101) die Abbildung des zweiten Strahlflecks (9) als ortsaufgelöste Signale gewandelt, in der zweiten Schicht (102) die Signale verstärkt, in der dritten Schicht (103) die Signale in sichtbares Licht gewandelt und eine Zwischenabbildung (11) erzeugt wird und in der vierten Schicht (104) die Zwischenabbildung (11) in Teilabbildungen (111 bis 113) zerlegt wird.

7. Vorrichtung nach einem der Ansprüche 5 oder 6, **dadurch gekennzeichnet, dass** ein Spiegelsystem vorhanden ist, welches die Signale in Teilabbildungen (111 bis 113) aufteilt.

8. Vorrichtung nach einem der Ansprüche 5 oder 6, **dadurch gekennzeichnet, dass** ein Lichtwellenleiter vorhanden ist, welcher die Signale in Teilabbildungen (111 bis 113) aufteilt.

9. Vorrichtung nach einem der Ansprüche 5 oder 6, **dadurch gekennzeichnet, dass** ein Standardobjektiv mit Strahlteiler vorhanden ist, welches die Signale in Teilabbildungen (111 bis 113) aufteilt.

10. Vorrichtung nach einem der Ansprüche 5 bis 9, **dadurch gekennzeichnet, dass** das Mittel zur Überführung in digitale Signale mindestens ein AD-Wandler (105) ist.

11. Vorrichtung nach Anspruch 10, **dadurch gekennzeichnet, dass** jeder AD-Wandler (105) einer der Teilabbildungen (111 bis 113) zugeordnet ist.

12. Vorrichtung nach einem der Ansprüche 5 bis 9, **dadurch gekennzeichnet, dass** das Mittel zur Überführung in digitale Signale eine Flächenkamera ist.

13. Vorrichtung nach einem der Ansprüche 5 bis 12, **dadurch gekennzeichnet, dass** der Sensor (10) aus diskreten Elementen besteht.

14. Vorrichtung nach einem der Ansprüche 5 bis 13, **dadurch gekennzeichnet, dass** der Sensor (10) als funktionelle Schicht in Form einer dünnen Platte ausgebildet ist, in der wenigstens zwei der Prozesse der Verstärkung, Wandlung, Abbildung und Aufteilung der Signale erfolgen.

15. Vorrichtung nach einem der Ansprüche 5 bis 14, **dadurch gekennzeichnet, dass** mehrere Sensoren (10) zusammengeschlossen sind.
